(19) Europäisches Patentamt
European Patent Office
Office européen des brevets

(11) **EP 4 550 938 A1**

(12) **EUROPEAN PATENT APPLICATION**

(43) Date of publication:
07.05.2025 Bulletin 2025/19

(21) Application number: 24167116.3

(22) Date of filing: 28.03.2024

(51) International Patent Classification (IPC):
H05B 45/20 (2020.01)    H05B 47/155 (2020.01)
H05B 47/175 (2020.01)

(52) Cooperative Patent Classification (CPC):
H05B 47/155; H05B 45/20; H05B 47/175;
Y02B 20/40

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 03.11.2023 CN 202311460212

(71) Applicant: Agzzx Optoelectronics Technology
Co., Ltd
Fuzhou Fujian (CN)

(72) Inventor: LIN, Fufei
Fuzhou (CN)

(74) Representative: Chung, Hoi Kan
Mandarin IP Limited
7 Cherry Trees
Great Shelford
Cambridge CB22 5XA (GB)

(54) **METHOD AND TERMINAL OF CONTROLLING INTELLIGENT LAYERED MULTI-SCENE ATMOSPHERE LIGHTING**

(57)    The present invention discloses a method and a terminal of controlling intelligent layered multi-scene atmosphere lighting, comprising the steps of: automatically acquiring parameters of a current scene by wireless or wired means; according to the parameters of the current scene, extracting characteristic color values from a batch of previously tested picture data, and calculating the color values of each lamp bead in each layer corresponding to the parameters in the current scene; and controlling multi-layer lamp beads to periodically and synchronously display the calculated plurality of color values in a dynamic and cyclic manner. According to different current scene parameters, the present invention controls the lamp beads to simulate the continuous spectrum of natural light in different scenes, and presents the natural colorful atmosphere effect of dynamic multi-layer synchronous gradual change, so that color performance is richer and presentation effect is more authentic.

S1, automatically acquiring parameters of a current scene by wireless or wired means;

S2, according to the parameters of the current scene, extracting characteristic color values from a batch of previously tested picture data, and calculating the color values of each lamp bead in each layer corresponding to the parameters in the current scene; and

S3, controlling multi-layer lamp beads to periodically and synchronously display the calculated plurality of color values in a dynamic and cyclic manner.

Figure 1

## Description

### Technical field

The present invention relates to the technical field of intelligent technologies, in particular to a method and a terminal of controlling intelligent layered multi-scene atmosphere lighting.

### Background

The colors of natural light are rich, and their effects are also unique under the reflection from different environments at different distances. However, the current light bulb applications can only support single RGB color change in this respect, which undoubtedly has a limitation.

First of all, this single lighting effect can't meet our needs for a variety of color changes. In practice, color is ever-changing, and the single RGB color change can't simulate this richness. When we try to simulate a scene, if we can only use a single color, the richness and realism of the scene will be greatly reduced. For example, when we want to simulate the sunset scene by the sea at home, if we can only use one color of light, faithfulness of this simulation will be very limited.

Secondly, the way of lighting as used in fixed scenes is not dynamic enough. In modern life, we often need to adjust environmental atmosphere according to different situations and needs. For example, when celebrating a festival or holding a party, we may need to change the color and brightness of the lights to create a different atmosphere. However, if our light bulbs can only cope with fixed scenes, we can't achieve adjustment of dynamic atmosphere.

To sum up, current light bulbs in the market can't meet requirements of colorful light changes and dynamics because of its single lighting effect and the use in fixed scenes.

### Summary of the invention

A technical problem to be solved by the present invention is to provide a method and a terminal of controlling intelligent layered multi-scene atmosphere lighting, so that colors in different scenes perform better and presentation effects are more faithful.

In order to solve the technical problem above, the technical solutions adopted by the present invention are as follows:

a method of controlling intelligent layered multi-scene atmosphere lighting comprises the steps of:

> 51, automatically acquiring parameters of a current scene by wireless or wired means;
> S2, according to the parameters of the current scene, extracting characteristic color values from a batch of previously tested picture data, and calculating the color values of each lamp bead in each layer corresponding to the parameters in the current scene ;
> S3, controlling multi-layer lamp beads to periodically and synchronously display the calculated plurality of color values in a dynamic and cyclic manner.

In order to solve the technical problem above, another technical scheme adopted by the invention is as follows:
a terminal of controlling intelligent layered multi-scene atmosphere lighting, comprising a memory, a processor and a computer program stored in the memory and running on the processor. When the processor executes the computer program to carry out the following steps are realized:

> S1, automatically acquiring parameters of a current scene by wireless or wired means;
> S2, according to the parameters of the current scene, extracting characteristic color values from a batch of previously tested picture data, and calculating the color values of each lamp bead in each layer corresponding to the parameters in the current scene ;
> S3, controlling the multi-layer lamp beads to periodically and synchronously display the calculated plurality of color values in a dynamic and cyclic manner.

The present invention has the beneficial effects: the characteristic color values are extracted from the batch of previously tested picture data with different current scene parameters obtained, then the lamp beads are layered, and the color values of each lamp bead in each layer corresponding to the current scene parameters are calculated according to the extracted characteristic color values, and finally the lamp beads in each layer are synchronously displayed periodically and dynamically according to each calculated color value in order to present a natural and colorful atmosphere of dynamic multi-layer synchronous gradual change, that is, layered blooming is used to simulate the continuous spectrum of natural light in different scenes, so that color performance of the scene is richer and presentation effect is more authentic.

## Brief description of drawings

Fig. 1 is an overall flow chart of a method of controlling intelligent layered multi-scene atmosphere lighting according to an embodiment of the present invention.
Fig. 2 is a HSV color model according to an embodiment of the present invention;
Fig. 3 is a color dynamic change model in a scene according to the embodiment of the present invention;
Fig. 4 is a flowchart of basic steps of a method for implementing the dynamic change of the lighting effect in the preset scene in the embodiment of the present invention;
Fig. 5 is a flowchart of basic steps of a method for realizing dynamic changes of lighting effects in a customized scene in the embodiment of the present invention;
Fig. 6 is a schematic structural diagram of a terminal of controlling intelligent layered multi-scene atmosphere lighting according to an embodiment of the present invention.

Description of reference numbers:
1. terminal of controlling intelligent layered multi-scene atmosphere lighting; 2. memory; and 3. processor.

## Embodiments

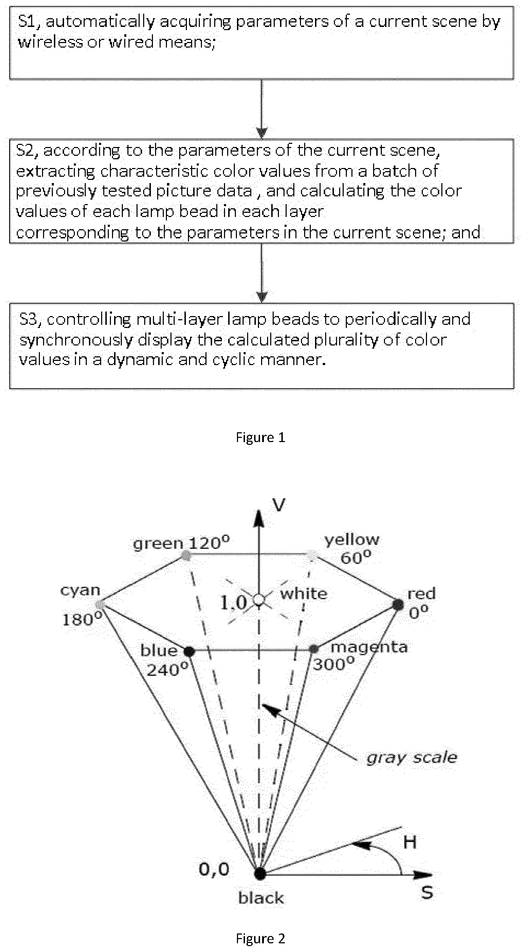

In order to explain the technical content, purpose and effect realized of the present invention in detail, the following description will be made in combination with embodiments and accompanying drawings.
Please refer to fig. 1 to fig. 5, a method of controlling intelligent layered multi-scene atmosphere lighting comprises the steps of:

51, automatically acquiring parameters of a current scene by wireless or wired means;
S2, according to the parameters of the current scene, extracting characteristic color values from a batch of previously tested picture data, and calculating the color values of each lamp bead in each layer corresponding to the parameters in the current scene ; and
S3, controlling multi-layer lamp beads to periodically and synchronously display the calculated plurality of color values in a dynamic and cyclic manner.

According to the above description, the present invention has beneficial effects that the characteristic color values are extracted from the batch of previously tested picture data with different current scene parameters obtained, then the lamp beads are layered, and the color values of each lamp bead in each layer corresponding to the current scene parameters are calculated according to the extracted characteristic color values, and finally the lamp beads in each layer are synchronously displayed periodically and dynamically according to each calculated color value in order to present a natural and colorful atmosphere of dynamic multi-layer synchronous gradual change, that is, layered blooming is used to simulate the continuous spectrum of natural light in different scenes, so that color performance of the scene is richer and presentation effect is more authentic.
Further, the step S1 further comprises:
controlling the lamp beads to be self-adaptive in advance to perform optimal atmosphere lighting according to the current scene parameters.
According to the above description, the colors of the lamp beads are adjusted adaptively in advance according to the current scene parameters to achieve the best atmosphere lighting effects, so that the simulated natural light effect achieved is more realistic when calculating the color values of each layer of lamp beads according to the current scene parameters.
Further, between the steps S1 and S2, the method further comprises the step of:

S12, numbering each layer of the lamp beads $L(n),$ wherein $n$ represents number of layers, and defining c $m$ lamp beads;
the step S2 further comprises:
according to the current scene parameters, extracting the characteristic color values from the batch of previously tested picture data, and calculating the color values $H_m^n S_n V_m^n$ of $m$ lamp beads in $n$ layers corresponding to the current scene parameters, wherein $H_m^n$ is a hue value of the mth lamp bead on the $n$th layer, $S_n$ is a saturation value of all the lamp beads on the $n$th layer, and $V_m^n$ is a brightness value of the $m$th lamp bead on the $n$th layer.

According to the above description, each layer of lamp beads is numbered to simulate multi-level variation of light blooming effect of natural light in the far and near distance; from the color values composed of hue, saturation and brightness values calculated according to the current scene parameters of each layer of the lamp beads, it can be know that the hue, saturation and brightness values will change with changes of the number of layers n; so that the color values of different levels at the same time in each dynamic scene are different; and the color values of the same level at different times are also different and thus rich light effect are presented.

Further, the step S3 specifically comprises:

a formula for defining dynamic cyclic display as follow:

$$L(n) = H_0^n S_n V_0^n \xrightarrow{t_{fading}^{[n][0]}} H_1^n S_n V_1^n \cdots H_m^n S_n V_m^n \xrightarrow{t_{fading}^{[n][m]}} H_0^n S_n V_0^n \quad (1);$$

wherein $L(0)$ to $L(n)$ are synchronized and $t_{fading}^{[n][m]}$ is a preset gradient speed between each color value; adjustment formulas of the brightness value $V$ and the speed $t$ are defined as follows:

$$V_m^n = V_m^n \times V \quad (2);$$

$$t_{fading}^{[n][m]} = t_{fading}^{[n][m]} \times t \quad (3);$$

wherein, an adjustment range of $V$ is 10%~100% of $V_m^n$, and an adjustment range of $t$ is 1%~100% of $t_{fading}^{[n][m]}$.

According to the above description, through the periodic multi-dimensional synchronous dynamic cycle display, the lamp beads of each layer is able to show dynamic gradient effect synchronously in time and space, which make the color of the scene is enriched.

Further, the step S3 further comprises:

obtaining a sum of $x$ color values $H_x^n S_n V_x^n$ arbitrarily set by the user, and synchronously controlling $m$ lamp beads of $n$ layers to display $x$ color values $H_x^n S_n V_x^n$ periodically and dynamically.

According to the above description, the user can also customize various scenes by designing the atmosphere lights by himself.

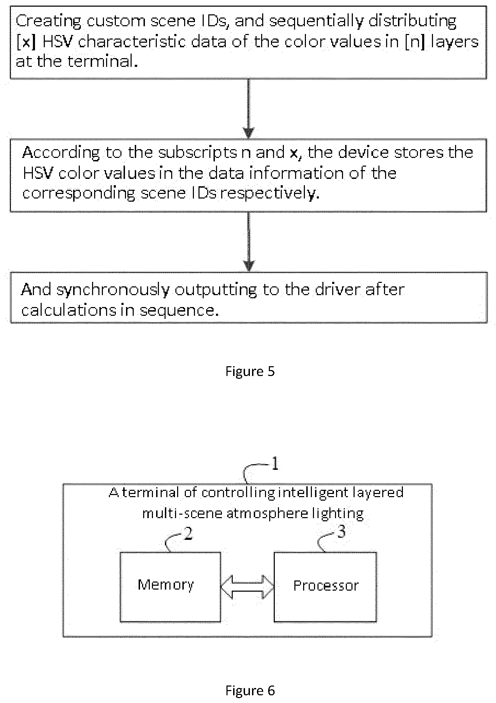

Please refer to fig. 6, a control terminal of intelligent layered multi-scene cloud atmosphere light, comprising a memory, a processor and a computer program stored in the memory and running on the processor. When the processor executes the computer program, it realizes the following steps:

51, automatically acquiring parameters of a current scene by wireless or wired means;

S2, according to the parameters of the current scene, extracting characteristic color values from a batch of previously tested picture data, and calculating the color values of each lamp bead in each layer corresponding to the parameters in the current scene ; and

S3, controlling the multi-layer lamp beads to periodically and synchronously display the calculated plurality of color values in a dynamic and cyclic manner.

According to the above description, the present invention has the beneficial effects: based on a same technical concept, the control terminal of intelligent layered multi-scene cloud atmosphere light is provided in cooperation with the method of controlling intelligent layered multi-scene cloud atmosphere light, wherein the characteristic color values are extracted from the batch of previously tested picture data with different current scene parameters obtained, then the lamp beads are layered, and the color values of each lamp bead in each layer corresponding to the current scene parameters are calculated according to the extracted characteristic color values, and finally the lamp beads in each layer are synchronously displayed periodically and dynamically according to each calculated color value in order to present a natural and colorful atmosphere of dynamic multi-layer synchronous gradual change, that is, layered blooming is used to simulate the continuous spectrum of natural light in different scenes, so that color performance of the scene is richer and presentation effect is more authentic.

Further, the step S1 further comprises:

controlling the lamp beads to be self-adaptive in advance to perform optimal atmosphere lighting according to the current scene parameters.

According to the above description, the colors of the lamp beads are adjusted adaptively in advance according to the current scene parameters to achieve the best atmosphere lighting effects, so that the simulated natural light effect achieved is more realistic when calculating the color values of each layer of lamp beads according to the current scene parameters.

Further, between the steps S1 and S2, the method further comprises the step of:

S12, numbering each layer of the lamp beads $L(n)$, wherein $n$ represents the number of layers, and defining each layer having $m$ lamp beads;

the step S2 further comprises:

according to the current scene parameters, extracting the characteristic color values from the batch of previously tested picture data, and calculating the color values $H_m^n S_n V_m^n$ of m lamp beads in $n$ layers corresponding to the current scene parameters, wherein $H_m^n$ is the hue value of the $m$th lamp bead on the $n$th layer, $S_n$ is the saturation value of all the lamp beads on the nth layer, and $V_m^n$ is the brightness value of the $m$th lamp bead on the $n$th layer.

According to the above description, each layer of lamp beads is numbered to simulate multi-level variation of light blooming effect of natural light in the far and near distance; from the color values composed of hue, saturation and brightness values calculated according to the current scene parameters of each layer of the lamp beads, it can be know that the hue, saturation and brightness values will change with changes of the number of layers n; so that the color values of different levels at the same time in each dynamic scene are different; and the color values of the same level at different times are also different and thus rich light effect are presented.

Further, the step S3 specifically comprises:

a formula for defining dynamic cyclic display as follow:

$$L(n) = H_0^n S_n V_0^n \xrightarrow{\ t_{fading}^{[n][0]}\ } H_1^n S_n V_1^n \cdots H_m^n S_n V_m^n \xrightarrow{\ t_{fading}^{[n][m]}\ } H_0^n S_n V_0^n \quad (1);$$

wherein $L(0)$ to $L(n)$ are synchronized and $t_{fading}^{[n][m]}$ is a preset gradient speed between each color value; adjustment formulas of the brightness value V and the speed t are defined as follows:

$$V_m^n = V_m^n \times V \quad (2);$$

$$t_{fading}^{[n][m]} = t_{fading}^{[n][m]} \times t \quad (3);$$

wherein, an adjustment range of $V$ is 10%~100% of $V_m^n$, and an adjustment range of $t$ is 1%~100% of $t_{fading}^{[n][m]}$.

According to the above description, through the periodic multi-dimensional synchronous dynamic cycle display, the lamp beads of each layer is able to show dynamic gradient effect synchronously in time and space, which make the color of the scene is enriched.

Further, the step S3 further comprises:

obtaining a sum of $x$ color values $H_x^n S_n V_x^n$ arbitrarily set by the user, and synchronously controlling $m$ lamp beads of $n$ layers to display $x$ color values $H_x^n S_n V_x^n$ periodically and dynamically.

According to the above description, the user can also customize various scenes by designing the atmosphere lights by himself.

The present invention provides the method of controlling intelligent layered multi-scene atmosphere lighting, which is used for simulating natural light illumination in various scenes, and is specifically described in combination with embodiment in the following.

Please refer to fig. 1, a first embodiment of the present invention is as follows:

the method of controlling intelligent layered multi-scene atmosphere lighting as shown in Fig.1, comprises the steps of: 51, automatically acquiring parameters of a current scene by wireless or wired means, and controlling the lamp beads to be self-adaptive in advance to perform optimal atmosphere lighting according to the current scene parameters.

In the present embodiment, acquisition of the current scene parameters can be realized by setting automatic mode of the intelligent device; or controlling the lamp beads to perform adaptive optimal atmosphere lighting by displaying the acquired current scene parameters, wherein the adaptive optimal atmosphere lighting can be realized by adaptive adjustment of the existing intelligent device through photosensitive sensors; and the self-adaptive optimal atmosphere lighting display of the lamp beads can make the simulated natural light effect achieved more realistic when calculating the color values of each layer of lamp beads according to the current scene parameters.

S2, according to the parameters of the current scene, extracting characteristic color values from the batch of previously tested picture data, and calculating the color values of each lamp bead in each layer corresponding to the parameters in the current scene ; and

S3, controlling the multi-layer lamp beads to periodically and synchronously display the calculated plurality of color values in a dynamic and cyclic manner.

Namely, in the present embodiment, the characteristic color values are extracted from the batch of previously tested picture data with different current scene parameters obtained, then the lamp beads are layered, and the color values of each lamp bead in each layer corresponding to the current scene parameters are calculated according to the extracted characteristic color values, and finally the lamp beads in each layer are synchronously displayed periodically and dynamically according to each calculated color value in order to present a natural and colorful atmosphere of dynamic multi-layer synchronous gradual change, which meets requirements of multi-dimensional dynamic adjustment; and layered blooming is used to simulate the continuous spectrum of natural light in different scenes, which make the color of the scene is enriched and the light effects are more realistic.

Please refer to fig. 2-5, a second embodiment of the present invention is as follows:

the method of controlling intelligent layered multi-scene atmosphere lighting, based on the first embodiment, in the present embodiment, between the steps S1 and S2, the method further comprises the step of:

S12, numbering each layer of the lamp beads $L(n)$, wherein $n$ represents the number of layers, and defining each layer having m lamp beads, so as to provide a basis for the subsequent realization of simulating the multi-level variation of light blooming effect of natural light in the far and near distance.

In the present embodiment, step S2 further comprises:

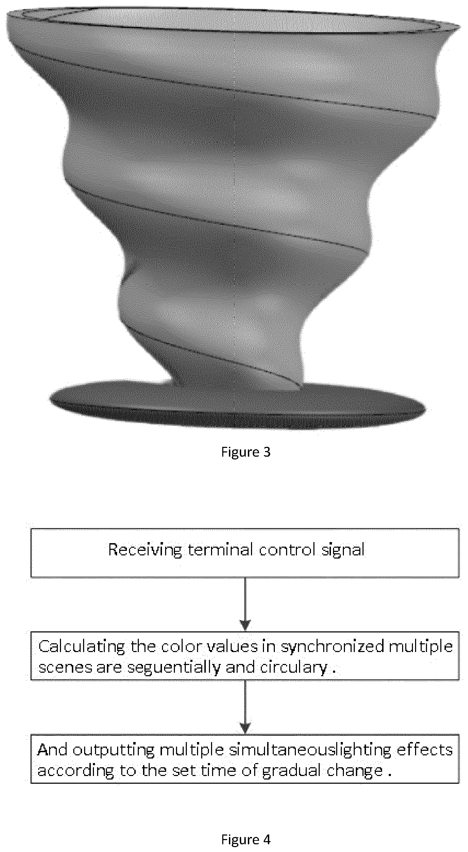

according to the current scene parameters, extracting the characteristic color values from the batch of previously tested picture data, and calculating the color values $H_m^n S_n V_m^n$ of m lamp beads in n layers corresponding to the current scene parameters, wherein $H_m^n$ is the hue value of the $m$th lamp bead on the $n$th layer, $S_n$ is the saturation value of all the lamp beads on the nth layer, and $V_m^n$ is the brightness value of the $m$th lamp bead on the $n$th layer; wherein from the color values composed of hue, saturation and brightness values calculated according to the current scene parameters of each layer of the lamp beads, it can be know that the hue, saturation and brightness values will change with changes of the number of layers n; so that the color values of different levels at the same time in each dynamic scene are different and the color values of the same level at different times are also different and thus rich light effect are presented; and wherein a step flow of a method of implementing the dynamic change of the lighting effect in the preset scene is shown in Figure 4.

Meanwhile, the step S3 in the present embodiment specifically comprises:

a formula for defining dynamic cyclic display as follow:

$$L(n) = H_0^n S_n V_0^n \xrightarrow{t_{fading}^{[n][0]}} H_1^n S_n V_1^n \cdots H_m^n S_n V_m^n \xrightarrow{t_{fading}^{[n][m]}} H_0^n S_n V_0^n \quad (1);$$

wherein $L(0)$ to $L(n)$ are synchronized and $t_{fading}^{[n][m]}$ is a preset gradient speed between each color value; adjustment formulas of the brightness value $V$ and the speed t are defined as follows:

$$V_m^n = V_m^n \times V \quad (2);$$

$$t_{fading}^{\left[n\right]\left[m\right]} = t_{fading}^{\left[n\right]\left[m\right]} \times t \quad (3);$$

wherein, an adjustment range of $V$ is 10%~100% of $V_m^n$, and an adjustment range of $t$ is 1%~100% of $t_{fading}^{\left[n\right]\left[m\right]}$. In the present embodiment, the user can adjust brightness and speed at the terminal according to personal preference; wherein the step flow for realizing dynamic changes of lighting effects in a customized scene is shown in Fig. 5.

Namely, through the periodic multi-dimensional synchronous dynamic cycle display, the lamp beads of each layer is able to show dynamic gradient effect synchronously in time and space, which make the color of the scene is enriched.

In addition, in the present embodiment, the step S3 further comprises: obtaining a sum of x color values $H_x^n S_n V_x^n$ arbitrarily set by the user, and synchronously controlling $m$ lamp beads of $n$ layers to display x color values $H_x^n S_n V_x^n$ periodically and dynamically.

Examples of the above-mentioned realization effects are shown in Tables 1-4, which respectively represent data of change effects of sunset glow, lavender, forest and ocean in a period T, where Ti represents an effect at the ith moment, and it can be seen from the tables that the lighting in each scene presents a dynamic effect.

Table 1:

| Sunset | Layers ( n ) Color values (m) | HSV0(T0) | HSV1(T1) | HSV2(T2) | HSV3(T3) | HSV4(T4) | ...HSVm(Ti) |
|---|---|---|---|---|---|---|---|
| glow | 0 | 12, 100, 80 | 5, 100, 80 | 12, 100, 100 | 5, 100, 50 | 5, 100, 30 | ... |
| | 1 | 340, 100, 50 | 280, 100, 80 | 0, 100, 100 | 0, 100, 100 | 280, 100, 50 | ... |

Table 2:

| Lavender | Layers ( n ) Color values (m) | HSV0(T0) | HSV1(T1) | HSV2(T2) | ...HSVm(Ti) |
|---|---|---|---|---|---|
| | 0 | 345, 80, 100 | 345, 80, 100 | 335, 60, 100 | ... |
| | 1 | 345, 80, 100 | 325, 80, 100 | 335, 60, 100 | ... |

Table 3:

| Forest | Layers (n) Color values (m) | HSV0(T0) | HSV1(T1) | HSV2(T2) | HSV3(T3) | ...HSVm(Ti) |
|---|---|---|---|---|---|---|
| | 0 | 90, 100, 80 | 34, 100, 100 | 70, 100, 100 | 100, 80, 100 | ... |
| | 1 | 120, 100, 100 | 130, 80, 50 | 135, 80, 50 | 100, 80, 100 | ... |

Table 4:

| Ocean | Layers (n) Color values (m) | HSV0(T0) | HSV1(T1) | HSV2(T2) | ...HSVm(Ti) |
|---|---|---|---|---|---|
| | 0 | 240, 100, 100 | 230, 80, 100 | 200, 60, 100 | ... |
| | 1 | 240, 10, 80 | 240, 10, 80 | 240, 10, 80 | ... |

As shown in Fig. 2, it is an HSV(Hue, Saturation, Value) color model, which is a color space created by A.R.Smith in 1978 according to intuitive characteristics of colors, also known as Hexcone Model. HSV color model refers to a subset of visible light in H, S and V three-dimensional color space, which contains all colors in a certain color domain. Therefore, when $m$ color values are established in each layer of the lamp beads, if all these $m$ color values are traced in HSV color model in Fig. 2, color change trajectory in the scene is shown in the dynamic color change model of the scene in Fig. 3, similar to the tornado model, whose shape such as height and thinness can change with H, S and V, and the effect presented by the scene will be colorful.

Please refer to fig. 6, a third embodiment of the present invention is as follows:

a control terminal of intelligent layered multi-scene cloud atmosphere light, as shown in fig. 6, comprises a memory 2, a processor 3 and a computer program stored in the memory 2 and executable on the processor 3. When the processor 3 executes the computer program, the steps in any one of the above-mentioned embodiments 1 to 3 are realized.

To sum up, the method and the terminal of controlling intelligent layered multi-scene atmosphere lighting provided by the present invention have the following beneficial effects:

1. The color presentation is more abundant and flexibly used in different scenes, showing more authentic presentation effect; and the color presentation can be deigned by the user himself;

2. Multi-layer lamp beads driven synchronously are adopted, and multi-dimensional color control presents the more hierarchical scene.

The above are only the embodiments of the present invention, which does not limit the protective scope of the present invention. All equivalent transformations made by using the contents of the specification and drawings of the present invention, or directly or indirectly used in related technical fields, are equally comprised in the protective scope of the present invention.

## Claims

1. A method of controlling intelligent layered multi-scene atmosphere lighting, comprising the steps of:

51, automatically acquiring parameters of a current scene by wireless or wired means;

S2, according to the parameters of the current scene, extracting characteristic color values from a batch of previously tested picture data , and calculating the color values of each lamp bead in each layer corresponding to the parameters in the current scene; and

S3, controlling multi-layer lamp beads to periodically and synchronously display the calculated plurality of color values in a dynamic and cyclic manner.

2. The method of controlling intelligent layered multi-scene atmosphere light according to claim 1, wherein the step S1 further comprises:
controlling the lamp beads to be self-adaptive in advance to perform optimal atmosphere lighting according to the current scene parameters.

3. The method of controlling intelligent layered multi-scene atmosphere light according to claim 1, wherein between the steps S1 and S2, the method further comprises the step of:

S12, numbering each layer of the lamp beads $L(n)$, wherein n represents number of layers, and defining each layer having m lamp beads;

the step S2 further comprises:

according to the current scene parameters, extracting the characteristic color values from the batch of previously tested image data, and calculating the color values $H_m^n S_n V_m^n$ of m lamp beads in n layers corresponding to the current scene parameters, wherein $H_m^n$ is a hue value of the mth lamp bead on the nth layer, $S_n$ is a saturation value of all the lamp beads on the nth layer, and $V_m^n$ is a brightness value of the $m$th lamp bead on the nth layer.

4. The method of controlling intelligent layered multi-scene atmosphere light according to claim 3, wherein the step S3 comprises:

a formula for defining dynamic cyclic display as follow:

$$L(n) = H_0^n S_n V_0^n \xrightarrow{t_{fading}^{[n][0]}} H_1^n S_n V_1^n \cdots H_m^n S_n V_m^n \xrightarrow{t_{fading}^{[n][m]}} H_0^n S_n V_0^n \quad (1);$$

wherein $L(0)$ to $L(n)$ are synchronized and $t_{fading}^{[n][m]}$ is a preset gradient speed between each color value; adjustment formulas of the brightness value V and the speed t are defined as follows:

$$V_m^n = V_m^n \times V \quad \text{(2)};$$

$$t_{fading}^{[n][m]} = t_{fading}^{[n][m]} \times t \quad \text{(3)};$$

wherein, an adjustment range of $V$ is 10%~100% of $V_m^n$, and an adjustment range of $t$ is 1%~100% of $t_{fading}^{[n][m]}$.

5. The method of controlling intelligent layered multi-scene atmosphere light according to claim 3, wherein the step S3 further comprises:
obtaining a sum of $x$ color values $H_x^n S_n V_x^n$ arbitrarily set by the user, and synchronously controlling $m$ lamp beads of $n$ layers to display $x$ color values $H_x^n S_n V_x^n$ periodically and dynamically.

6. A terminal of controlling intelligent layered multi-scene atmosphere lighting, comprising a memory, a processor and a computer program stored in the memory and running on the processor; and when the processor executes the computer program to carry out the following steps:

   S1, automatically acquiring parameters of a current scene by wireless or wired means;
   S2, according to the parameters of the current scene, extracting characteristic color values from a batch of previously tested picture data, and calculating the color values of each lamp bead in each layer corresponding to the parameters in the current scene; and
   S3, controlling the multi-layer lamp beads to periodically and synchronously display the calculated plurality of color values in a dynamic and cyclic manner.

7. The terminal of controlling intelligent layered multi-scene atmosphere lighting according to claim 6, wherein the step S1 further comprises:
controlling the lamp beads to be self-adaptive in advance to perform optimal atmosphere lighting according to the current scene parameters.

8. The terminal of controlling intelligent layered multi-scene atmosphere lighting according to claim 6, wherein between the steps S1 and S2, further comprises the step of:

   S12, numbering each layer of the lamp beads $L(n)$, wherein $n$ represents number of layers, and defining each layer having $m$ lamp beads;
   the step S2 further comprises:
   according to the current scene parameters, extracting the characteristic color values from the batch of previously tested image data, and calculating the color values $H_m^n S_n V_m^n$ of $m$ lamp beads in $n$ layers corresponding to the current scene parameters, wherein $H_m^n$ is the hue value of the $m$th lamp bead on the $n$th layer, $S_n$ is the saturation value of all the lamp beads on the $n$th layer, and $V_m^n$ is the brightness value of the $m$th lamp bead on the $n$th layer.

9. The terminal of controlling intelligent layered multi-scene atmosphere lighting according to claim 8, wherein the step S3 comprises:

   a formula for defining dynamic cyclic display as follow:

$$L(n) = H_0^n S_n V_0^n \xrightarrow{t_{fading}^{[n][0]}} H_1^n S_n V_1^n \cdots H_m^n S_n V_m^n \xrightarrow{t_{fading}^{[n][m]}} H_0^n S_n V_0^n \quad \text{(1)};$$

wherein $L(0)$ to $L(n)$ are synchronized and $t_{fading}^{[n][m]}$ is a preset gradient speed between each color value; adjustment formulas of the brightness value V and the speed t are defined as follows:

$$V_m^n = V_m^n \times V \quad (2);$$

$$t_{fading}^{[n][m]} = t_{fading}^{[n][m]} \times t \quad (3);$$

wherein, an adjustment range of $V$ is 10%~100% of $V_m^n$, and an adjustment range of t is 1%~100% of $t_{fading}^{[n][m]}$.

10. The terminal of controlling intelligent layered multi-scene atmosphere lighting according to claim 8, wherein the step S3 further comprises:
obtaining a sum of $x$ color values $H_x^n S_n V_x^n$ arbitrarily set by the user, and synchronously controlling $m$ lamp beads of $n$ layers to display $x$ color values $H_x^n S_n V_x^n$ periodically and dynamically.

S1, automatically acquiring parameters of a current scene by wireless or wired means;

S2, according to the parameters of the current scene, extracting characteristic color values from a batch of previously tested picture data , and calculating the color values of each lamp bead in each layer corresponding to the parameters in the current scene; and

S3, controlling multi-layer lamp beads to periodically and synchronously display the calculated plurality of color values in a dynamic and cyclic manner.

Figure 1

Figure 2

Figure 3

Receiving terminal control signal

Calculating the color values in synchronized multiple scenes are seguentially and circulary .

And outputting multiple simultaneouslighting effects according to the set time of gradual change .

Figure 4

Creating custom scene IDs, and sequentially distributing [x] HSV characteristic data of the color values in [n] layers at the terminal.

According to the subscripts n and x, the device stores the HSV color values in the data information of the corresponding scene IDs respectively.

And synchronously outputting to the driver after calculations in sequence.

Figure 5

1

A terminal of controlling intelligent layered multi-scene atmosphere lighting

2

3

Memory

Processor

Figure 6

Europäisches
Patentamt

European
Patent Office

Office européen
des brevets

# EUROPEAN SEARCH REPORT

Application Number

EP 24 16 7116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/045111 A1 (ALIAKSEYEU DZMITRY VIKTOROVICH [NL] ET AL) 9 February 2023 (2023-02-09) * abstract * * paragraph [0022] * | 1-10 | INV. H05B45/20 H05B47/155 H05B47/175 |
| A | US 2018/376564 A1 (VAN DE SLUIS BARTEL MARINUS [NL] ET AL) 27 December 2018 (2018-12-27) * abstract * | 1-10 | |
| A | WO 2011/124933 A1 (NATUREN KFT [HU]; BERKES BALAZS [HU]; FERENCZ ANDRAS [HU]) 13 October 2011 (2011-10-13) * abstract * | 1-10 | |

| TECHNICAL FIELDS SEARCHED (IPC) |
|---|
| H05B |

The present search report has been drawn up for all claims

| Place of search | Date of completion of the search | Examiner |
|---|---|---|
| Munich | 9 September 2024 | Boudet, Joachim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 550 938 A1

## ANNEX TO THE EUROPEAN SEARCH REPORT
## ON EUROPEAN PATENT APPLICATION NO.

EP 24 16 7116

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2024

| Patent document cited in search report | Publication date | Patent family member(s) | Publication date |
|---|---|---|---|
| US 2023045111 A1 | 09-02-2023 | CN 114902810 A | 12-08-2022 |
| | | EP 4091409 A1 | 23-11-2022 |
| | | US 2023045111 A1 | 09-02-2023 |
| | | WO 2021144232 A1 | 22-07-2021 |
| US 2018376564 A1 | 27-12-2018 | EP 3387883 A1 | 17-10-2018 |
| | | ES 2890779 T3 | 24-01-2022 |
| | | US 2018376564 A1 | 27-12-2018 |
| | | WO 2017097741 A1 | 15-06-2017 |
| WO 2011124933 A1 | 13-10-2011 | NONE | |

EPO FORM P0459

For more details about this annex : see Official Journal of the European Patent Office, No. 12/82